# EUROPEAN PATENT APPLICATION

(11) **EP 3 556 537 A1**
(43) Date of publication of application: **23.10.2019**
(21) Application number: 16924051.2
(22) Date of filing: 15.12.2016
(51) Int. Cl.: B29C 55/20

(54) **MOLDING CORE**

(71) Applicant: Hokosangyo Co., Ltd., Nisshin-shi, Aichi 470-0104 (JP)
(72) Inventor: BAN, Yasuhiro, Nisshin-shi Aichi 470-0104 (JP)
(74) Representative: Cabinet Bleger-Rhein-Poupon
(86) International application number: PCT/JP2016/087408
(87) International publication number: WO 2018/109907

(57) **Abstract**

One aspect of the present disclosure is a rod-shaped molding core used in production of a long and hollow molded object. The molding core includes divided pieces that assemble to form a rod-shaped body. The divided pieces include rod-shaped first, second, third, fourth, and fifth divided pieces. An outer peripheral surface of the first divided piece is entirely surrounded by the rest of the divided pieces in an assembled state. The second and third divided pieces are arranged to abut and interpose the first divided piece along a first direction orthogonal to a longitudinal direction and form a part of an outer peripheral surface of the rod-shaped body. The fourth and fifth divided pieces are arranged to abut and interpose the first divided piece along a second direction orthogonal to the first direction and form a part of the outer peripheral surface of the rod-shaped body.

## Description

### TECHNICAL FIELD

The present disclosure relates to a molding core.

### BACKGROUND ART

For example, a rod-shaped core member is used for molding a long hollow member made of a composite material based on resin and fiber. More specifically, the hollow member is obtained by molding the composite material on an outer peripheral surface of the core member and then pulling out the core member from the molded object.

When molding such a hollow member, there may be a case where the pull-out of the core member is difficult depending on the material or length of the core member. Such a case generates a need for a special jig or a need for a decrease in pull-out speed as a prevention of damages on the mold products and consequently reduces productivity. To facilitate the pull-out of the core member, a method of dividing the core member into two or more divided pieces is known (see, Patent Document 1).

### PRIOR ART DOCUMENTS

### PATENT DOCUMENTS

Patent Document 1: Japanese Unexamined Patent Application Publication No. 2000-117845

### SUMMARY OF THE INVENTION

### PROBLEMS TO BE SOLVED BY THE INVENTION

Patent Document 1 suggests a use of a core member (i.e., a molding core) that can be divided into two or more members that face one another across a space in the central area, and pull-out of the divided members from a molded object after stripping each divided member off the molded object.

However, if there is a space between the divided members, then a spacer or other members are subject to deformation and may not be able to maintain a stable shape when the length of the molded object is increased in a longitudinal direction. In addition, since the spacer and the divided members need to have a certain thickness to keep the strength, the hollow needs to have a certain size or greater. As a result, there may be a case where the disclosed molding core cannot be used depending on the size of the hollow in the molded object.

Preferably, one aspect of the present disclosure provides a molding core that can be easily pulled out from a molded object, is excellent in shape stability, and can help create a hollow of any requested size.

### MEANS FOR SOLVING THE PROBLEMS

One aspect of the present disclosure is a molding core having a rod-shape and used in production of a long hollow molded object. The molding core comprises divided pieces that are assembled to form one rod-shaped body. The divided pieces comprises a first divided piece having a rod-shape, a second divided piece and a third divided piece having a rod-shape, and a fourth divided piece and a fifth divided piece having a rod-shape. An outer peripheral surface of the first divided piece is entirely surrounded by the rest of the divided pieces in an assembled state. The second divided piece and the third divided piece are arranged to abut the first divided piece to interpose the first divided piece along a first direction orthogonal to a longitudinal direction of the first divided piece. The second divided piece and the third divided piece form a part of an outer peripheral surface of the rod-shaped body. The fourth divided piece and the fifth divided piece are arranged to abut the first divided piece to interpose the first divided piece along a second direction orthogonal to the first direction. The fourth divided piece and the fifth divided piece form a part of the outer peripheral surface of the rod-shaped body.

This configuration enables the first divided piece, which does not abut the molded object due to being surrounded by the rest of the divided pieces, to be easily pulled out from the hollow of the molded object after the molded object is formed. After pulling out the first divided piece from the hollow of the molded object, the second divided piece and the third divided piece can be pulled out from the hollow of the molded object using a space left by the pull-out of the first divided piece. Then, the opposing fourth divided piece and fifth divided piece are pulled out as being displaced inside the hollow of the object in the radial directions of the hollow. Accordingly, the fourth divided piece and the fifth divided piece can be easily pulled out from the hollow of the molded object at once.

The molding core of one aspect of the present disclosure includes no space between adjacent divided pieces; thus, the molding core is excellent in maintaining a stable shape when the length of the molding core is increased in the longitudinal direction. The size of each divided piece is hardly restricted in terms of the strength; thus, the hollow can be formed in any size.

In one aspect of the present disclosure, a shape of a cross section of the first divided piece taken perpendicular to the longitudinal direction may be a rectangle, a square, or a circle. This configuration enables a use of a commercially available members as the first divided piece. If the shape of the cross section of the first divided piece is a rectangle or a square, then processing of the rest of the divided pieces are facilitated, which leads to reduce the cost for components. If the shape of the cross section of the first divided piece is a perfect circle, then the pull-out of the first divided piece is facilitated.

In one aspect of the present disclosure, the second divided piece, the third divided piece, the fourth divided piece, and the fifth divided piece may each be fixed to the first divided piece with at least one screw inserted into the rod-shaped body in a radial direction. This configuration enables the divided pieces to be fixed to one another without a complex fixing mechanism, which leads to a reduction of the cost for processing the divided pieces. In addition, the molding core can be repeatedly used.

In one aspect of the present disclosure, the first divided piece may comprise a protrusion protruding in the longitudinal direction further than the rest of the divided pieces. This configuration facilitates the pull-out of only the first divided piece by a hold of the protrusion.

In one aspect of the present disclosure, at least one of the second divided piece, the third divided piece, the fourth divided piece, or the fifth divided piece may comprise an enlarged-width portion that is enlarged towards an outer peripheral surface of the rod-shaped body compared with other areas. This configuration enables a production of a high quality molded object having an outer diameter that changes along the longitudinal direction.

### BRIEF DESCRIPTION OF THE DRAWINGS

FIG. 1A is a schematic drawing showing a side surface of a molding core of an embodiment; FIG. 1B is a schematic drawing showing a plan view of the molding core in FIG. 1A.
FIG. 2 is a schematic cross sectional drawing of the molding core in FIG. 1A taken along a line II-II.
FIG. 3A to FIG. 3E are each a schematic cross sectional drawing of a molding core in an embodiment different from the embodiment of FIG. 2.
FIG. 4 is a schematic cross sectional drawing of a molding core in an embodiment different from the embodiments of FIG. 2 and FIG. 3A to FIG. 3E.
FIG. 5 is a schematic drawing showing a side surface of a molding core of an embodiment different from the embodiment of FIG. 1A.
FIG. 6 is a schematic cross sectional drawing of the molding core in FIG. 5 taken along a line VI-VI.
FIG. 7A is a schematic drawing showing a side surface of a molding core of an embodiment different from the embodiments of FIG. 1A and FIG. 5; FIG. 7B is a schematic cross sectional drawing of the molding core in FIG. 7A taken along a line VIIB-VIIB.

### EXPLANATION OF REFERENCE NUMERALS

1, 101, 201... molding core; 2A, 2B, 2C, 2D... screw; 11... first divided piece; 11A... protrusion; 11B... through hole; 12, 112, 212... second divided piece; 13, 113, 213... third divided piece; 14... fourth divided piece; 15... fifth divided piece; 102, 202... enlarged-diameter portion; 114, 214... first auxiliary divided piece; 115, 215... second auxiliary divided piece; 116, 216... third auxiliary divided piece; 117, 217... fourth auxiliary divided piece; 112A, 113A, 114A, 115A, 116A, 117A... enlarged-width portion; 212A, 213A, 214A, 215A, 216A, 217A... enlarged-width portion.

### MODE FOR CARRYING OUT THE INVENTION

Hereinafter, an embodiment of the present disclosure will be explained with reference to the drawings.

### [1. First Embodiment]

### [1-1. Configuration]

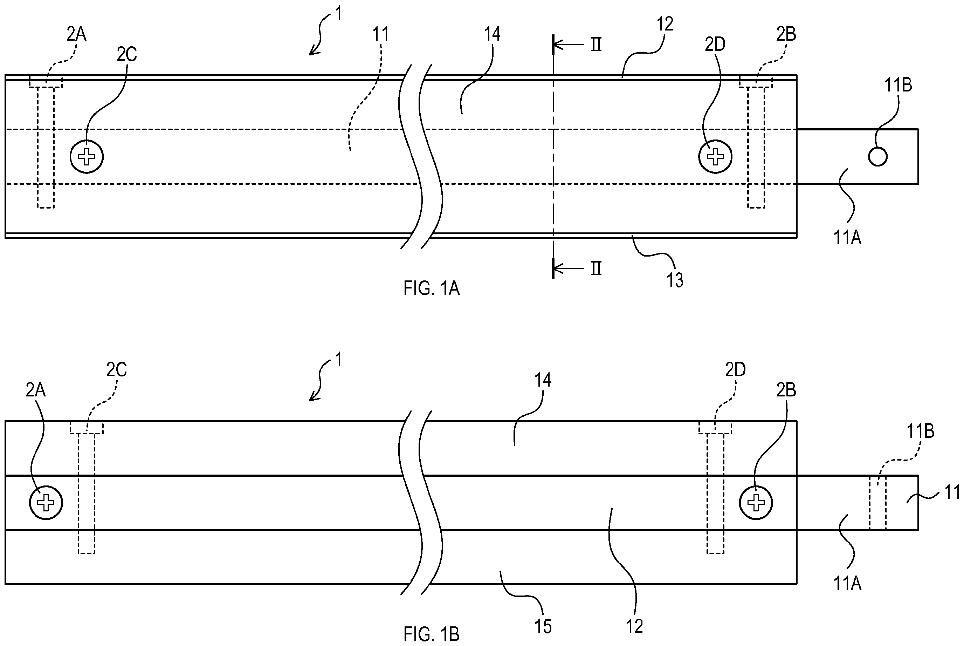

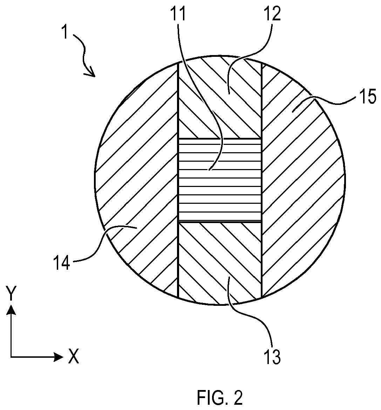

A molding core 1 shown in FIG. 1A, FIG. 1B, and FIG. 2 has a rod-shape and used in production of a long and hollow molded object. As shown in FIG. 2, the shape of a cross section of the molding core 1, taken perpendicular to a longitudinal direction of the molding core 1, is a perfect circle in the present embodiment. In other words, the molding core 1 is a columnar body. Although the length of the molding core 1 can be freely designed depending on the shape of the molded object, it may be equal to or greater than 0.1 m and equal to or less than 2 m for example.

The molding core 1 comprises divided pieces that assemble to form one rod-shaped body, and screws that fix the divided pieces together. In other words, the molding core 1 is configured dividable to divided pieces due to removal of the screws.

In the present embodiment, the molding core 1 comprises five divided pieces, namely, a first divided piece 11, a second divided piece 12, a third divided piece 13, a fourth divided piece 14, and a fifth divided piece 15. These divided pieces are rod-shaped portions of one rod-shaped body (that is the columnar body) made by dividing the rod-shaped body along surfaces parallel to the longitudinal direction of the rod-shaped body. The molding core 1 includes no space or gap between the adjacent divided pieces. In other words, the divided pieces are closely arranged to each other so that their abutting surfaces are closely attached to each other.

Each of the divided pieces are made of metal. Preferably, the metal is aluminum. The use of aluminum helps reduce the weight of the molding core 1. The use of aluminum also helps facilitate the cutting of each divided piece and therefore reduce cost of creating each divided piece.

### [First Divided Piece]

As shown in FIG. 2, the first divided piece 11 is arranged in the center of the molding core 1 such that an outer peripheral surface of the first divided piece 11 is entirely surrounded by other four divided pieces (namely, the second divided piece 12, the third divided piece 13, the fourth divided piece 14 and the fifth divided piece 15) when the divided pieces are assembled. The center of gravity of the first divided piece 11 coincides with the center of gravity of the molding core 1. The "outer peripheral surface" is an outer surface of the rod-shaped body that is parallel along the longitudinal direction of the rod-shaped body.

As mentioned above, the first divided piece 11 is a rod-shaped portion. In the present embodiment, the shape of the cross section of the first divided piece 11 taken perpendicular to the longitudinal direction is a rectangle, more specifically a square. In other words, the first divided piece 11 is a quadrangular prism.

One of the four side surfaces of the outer peripheral surface of the first divided piece 11 abuts the second divided piece 12. Another one of the four side surfaces of the first divided piece 11, which is opposite the side surface abutting the second divided piece 12, abuts the third divided piece 13. The remaining two side surfaces of the first divided piece 11 abut the fourth divided piece 14 and the fifth divided piece 15 such that they face each other.

The first divided piece 11 is made longer than the rest of the divided pieces along the longitudinal direction. As shown in FIG. 1A and FIG. 1B, the first divided piece 11 includes a protrusion 11A that protrudes further in the longitudinal direction than the rest of the divided pieces do. The protrusion 11A is a portion not used to create a molded object.

In a molding area that does not include the protrusion 11A, the outer peripheral surface of the first divided piece 11 having the four side surfaces is entirely in contact with the second divided piece 12, the third divided piece 13, fourth divided piece 14, or the fifth divided piece 15 when the divided pieces are assembled. In other words, the outer peripheral surface of the first divided piece 11 is not exposed in the molding area. The first divided piece 11 is therefore not covered with a mold material.

### [Second Divided Piece and Third Divided Piece]

As mentioned above, the second divided piece 12 and the third divided piece 13 are rod-shaped portions. As shown in FIG. 2, the shape of cross sections of the second divided piece 12 and the third divided piece 13, taken perpendicular to their longitudinal direction, is a rectangle with one of the four sides curved into an arc. The side surfaces of the second divided piece 12 and the third divided piece 13 defining the curved sides are parts of the outer peripheral surface of the molding core 1.

The second divided piece 12 and the third divided piece 13 both abut the first divided piece 11. The second divided piece 12 and the third divided piece 13 are arranged to interpose the first divided piece 11 along a first direction (along Y-axis in the drawings) orthogonal to the longitudinal direction. The second divided piece 12 and the third divided piece 13 are mirror images of each other with respect to the first divided piece 11.

In the present embodiment, in each of the second divided piece 12 and the third divided piece 13, a flat side surface that faces the side surface defining the outer peripheral surface of the molding core 1 abuts a side surface of the first divided piece 11. The maximum width of the second divided piece 12 and the third divided piece 13 in a second direction (X-axis in the drawings), orthogonal to the first direction, is the same as the maximum width of the first divided piece 11 in the second direction. The maximum width of the second divided piece 12 and the third divided piece 13 in the second direction may be equal to or less than the maximum width the first divided piece 11 in the second direction. The remaining two side surfaces of each of the second divided piece 12 and the third divided piece 13 (in other words, a side surface abutting the fourth divided piece 14 or the fifth divided piece 15) both extend in parallel with the Y-axis and are flush with the side surfaces of the first divided piece 11.

### [Fourth Divided Piece and Fifth Divided Piece]

As mentioned above, the fourth divided piece 14 and the fifth divided piece 15 are rod-shaped portions. As shown in FIG. 2, the shape of cross sections of the fourth divided piece 14 and the fifth divided piece 15, taken perpendicular to their longitudinal direction, includes an arc and a chord. The side surfaces of the fourth divided piece 14 and the fifth divided piece 15 defining the arcs are parts of the outer peripheral surface of the molding core 1. Accordingly, the outer peripheral surface of the molding core 1 is formed with the side surfaces of the divided pieces arranged in the order of the second divided piece 12, the fourth divided piece 14, the third divided piece 13, and the fifth divided piece 15. The side surfaces of the fourth divided piece 14 and the fifth divided piece 15 defining the chords in the cross section extend in parallel with the Y-axis and abut the first divided piece 11, the second divided piece 12, and the third divided piece.

The fourth divided piece 14 and the fifth divided piece 15 are arranged to interpose the first divided piece 11, the second divided piece 12 and the third divided piece 13 along the second direction (along the X-axis in the drawings). The fourth divided piece 14 and the fifth divided piece 15 are mirror images of each other with respect to the first divided piece 11.

### [Screw]

The screws 2A, 2B, 2C, and 2D fix the second divided piece 12, the third divided piece 13, the fourth divided piece 14, and the fifth divided piece 15 to the first divided piece 11. These screws are inserted through the second divided piece 12, the third divided piece 13, the fourth divided piece 14 and the fifth divided piece 15 in radial directions of the molding core 1.

More specifically, the second divided piece 12 has two screw holes, one each in both ends on the outer peripheral surface of the second divided piece 12. These two screw holes extend in the radial direction of the molding core 1, pass through the first divided piece 11, and reach inside the third divided piece 13. The second divided piece 12 and the third divided piece 13 are fixed to the first divided piece 11 with the screws 2A and 2B screwed into these two screw holes.

Similarly, the fourth divided piece 14 has two screw holes, one each in both ends on the outer peripheral surface of the fourth divided piece 14. These two screw holes extend in the radial direction of the molding core 1, pass through the first divided piece 11, and reach inside the fifth divided piece 15. The fourth divided piece 14 and the fifth divided piece 15 are fixed to the first divided piece 11 with the screws 2C and 2D screwed into these two screw holes.

The screws 2A, 2B, 2C, and 2D can be publicly known screws. A commercially available driver or hexagonal wrench may be used to tighten or remove the screws 2A, 2B, 2C, and 2D. Those areas on the molding core 1 where the screws 2A, 2B, 2C, and 2D are screwed are not used for molding the molded object.

### [1-2. Method of Use]

Hereinafter, a method of use of the molding core 1, that is, a method of producing the molded object using the molding core 1, will be explained. This method comprises a first process of molding the mold material on the outer peripheral surface of the molding core 1, and a second process of pulling out the molding core 1 from the molded object molded in the first process.

### [First Process]

In the first process, a hollow molded object is formed by layering the mold material on the outer peripheral surface of the molding core 1 that comprises the assembled and fixed divided pieces. The mold material for the molded object is not particularly limited and may include a resin alone, or a composite material made of resin and fiber (so-called fiber reinforced plastic), for example. The fiber may be, for example, a glass fiber and a carbon fiber. The form of the mold material layered on the molding core 1 may include a paste, a sheet, and so on.

### [Second Process]

In the second process, the molding core 1 that has the molded object molded on its outer peripheral surface is divided into the divided pieces and pulled out from the molded object along the central axis of the hollow.

Specifically, the second process comprises a process of removing the screws 2A, 2B, 2C, and 2D, a process of pulling out only the first divided piece 11 from the hollow of the molded object, a process of pulling out the second divided piece 12 and the third divided piece 13 from the hollow of the molded object after pulling out the first divided piece 11, a process of abutting the facing surfaces of the fourth divided piece 14 and the fifth divided piece 15 against each other after pulling out the second divided piece 12 and the third divided piece 13, and a process of pulling out the fourth divided piece 14 and the fifth divided piece 15, having their facing surfaces abutted against each other, from the hollow of the molded object.

In the process of pulling out only the first divided piece 11 from the hollow of the molded object, the pull-out is facilitated by a hold of the protrusion 11A of the first divided piece 11. The first divided piece 11 can be pulled out by hooking a jig through a through hole 11B formed in the protrusion 11A, for example.

In the processes of pulling out the second divided piece 12 and the third divided piece 13 as well as the fourth divided piece 14 and the fifth divided piece 15 from the hollow of the molded object, these divided pieces are displaced towards the central axis of the molding core 1 along the first directions or the second directions inside the hollow so as to be stripped from the inner surface of the molded object and subsequently pulled out from the hollow.

With the aforementioned steps, the molding core 1 can be expeditiously pulled out from the molded object while inhibiting damages on the molded object. In other words, a long and hollow molded object can be produced with high quality and at low cost.

Those individually pulled out divided pieces can be assembled again and fixed again with the screws 2A, 2B, 2C, and 2D after the aforementioned processes, so that the molding core 1 can be used to produce another molded object.

### [1-3. Effect]

According to the embodiment explicitly explained above, the following effects can be obtained.
(1a) The first divided piece 11 can be easily pulled out from the hollow after the molded object is molded since the first divided piece 11 does not abut the molded object. After pulling out the first divided piece 11, the second divided piece 12 and the third divided piece 13 can be relatively easily pulled out from the hollow of the molded object using a space left by the pull-out of the first divided piece 11. Then, the fourth divided piece 14 and the fifth divided piece 15 are attached together inside the hollow of the molded object and pulled out. Accordingly, the fourth divided piece and the fifth divided piece can be easily pulled out from the hollow of the molded object at once. As a result, the molding core 1 can be expeditiously pulled out from the molded object undamaged without using a special jig or device.
   Particularly, the maximum width of the second divided piece 12 and the maximum width of the third divided piece 13 in the second direction are the same as the maximum width of the first divided piece 11 in the second direction. Thus, after pulling out the first divided piece 11, the second divided piece 12 and the third divided piece 13 can be displaced towards the central axis of the molding core 1 so as to be stripped and pulled out from the molded object.
(1b) The molding core 1 includes no space between the adjacent divided pieces; thus, the molding core 1 is still excellent in maintaining a stable shape when the length of the molding core 1 is increased in the longitudinal direction. The size of each divided piece is hardly restricted in terms of the strength; thus, the hollow can be formed in any size. The molding core 1 needs no spacer of the conventional art; thus, the configuration of the molding core 1 is simple. Accordingly, the molding core 1 can be easily processed and produced at low cost.
(1c) The divided pieces are fixed with at least one (four in the present embodiment) screw; thus, no complicated mechanism is required, and the cost for processing the divided pieces can be reduced. The molding core 1 can be repeatedly used by tightening and removing of at least one (four in the present embodiment) screw.
(1d) The first divided piece 11 includes the protrusion 11A that protrudes further than the rest of the divided pieces do; thus, a user can easily pull out only the first divided piece 11 from the hollow of the molded object by holding the protrusion 11A.
(1e) The first divided piece 11 is a quadrangular prism; thus, a commercially available product can be used as the first divided piece 11. The abutting surfaces of the first divided piece 11 and the abutting surfaces of the rest of the divided pieces against the first divided piece 11 are flat; thus, the cost for processing the divided pieces can be reduced.

### [2. Second Embodiment]

### [2-1. Configuration]

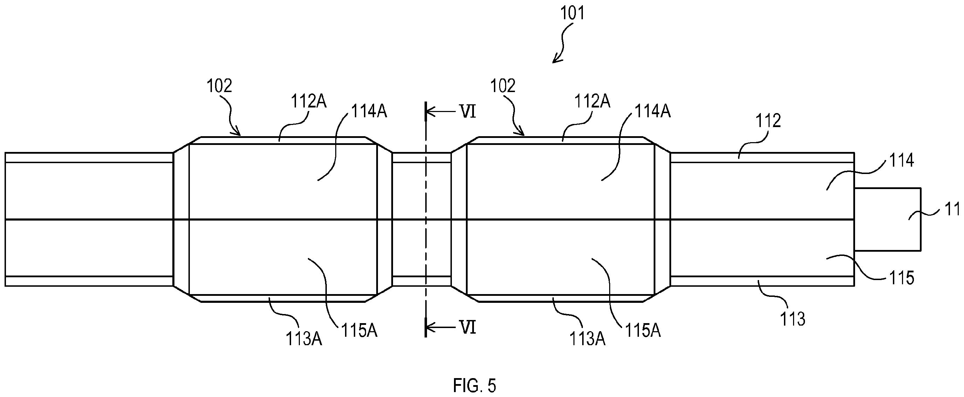

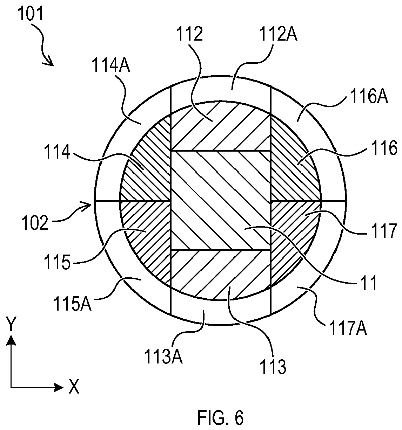

A molding core 101 shown in FIG. 5 and FIG. 6 has a rod-shape and used in production of a long and hollow molded object. The molding core 101 comprises at least one enlarged-diameter portion 102 situated in areas other than longitudinal ends of the molding core 101 and having an outer diameter larger than outer diameters of other areas of the molding core 101.

The molding core 101 comprises divided pieces that assemble to form one rod-shaped body, and screws (not shown) that fix the divided pieces together. The screws and a material for the divided pieces may be the same as those of the molding core 1 in FIG. 1.

In the present embodiment, the molding core 101 comprises seven divided pieces, namely, a first divided piece 11, a second divided piece 112, a third divided piece 113, a first auxiliary divided piece 114, a second auxiliary divided piece 115, a third auxiliary divided piece 116, and a fourth auxiliary divided piece 117. These divided pieces are rod-shaped portions of one rod-shaped body made by dividing the rod-shaped body along surfaces parallel to the longitudinal direction of the rod-shaped body. The molding core 101 includes no space or gap between the adjacent divided pieces.

### [First Divided Piece]

The first divided piece 11 is similar to the first divided piece 11 of the molding core 1 in FIG. 1. Therefore, the same reference numeral is given and the explanation is omitted.

### [Second Divided Piece and Third Divided Piece]

The second divided piece 112 and the third divided piece 113 respectively correspond to the second divided piece 12 and the third divided piece 13 of the molding core 1 in FIG. 1 respectively with an enlarged-width portion 112A and an enlarged-width portion 113A, which will be explained later. The second divided piece 112 and the third divided piece 113 both abut the first divided piece 11. The second divided piece 112 and the third divided piece 113 are arranged to interpose the first divided piece 11 along the first direction (along Y-axis in the drawings).

The second divided piece 112 and the third divided piece 113 respectively include at least one enlarged-width portion 112A and at least one enlarged-width portion 113A each having a width enlarged towards an outer peripheral surface of the molding core 101 compared with other areas along the longitudinal direction. The enlarged-width portions 112A, 113A form the enlarged-diameter portion 102 of the molding core 101 when the divided pieces are assembled. In other words, the enlarged-width portion 112A, 113A form a part of the outer peripheral surface of the enlarged-diameter portion 102.

### [First Auxiliary Divided Piece, Second Auxiliary Divided Piece, Third Auxiliary Divided Piece, and Fourth Auxiliary Divided Piece]

The first auxiliary divided piece 114 and the second auxiliary divided piece 115 both correspond to an equally divided half of a body made by adding an enlarged-width portion 114A and an enlarged-width portion 115A, which will be explained later, to the fourth divided piece 14 of the molding core 1 in FIG. 1. The halves are formed by dividing the body into two equal pieces across the Y-axis with divided surfaces that includes the central axis of the molding core 101. Likewise, the third auxiliary divided piece 116 and the fourth auxiliary divided piece 117 both correspond to an equally divided half of a body made by adding an enlarged-width portion 116A and an enlarged-width portion 117A, which will be explained later, to the fifth divided piece 15 of the molding core 1 in FIG. 1. In other words, in the present embodiment, the first auxiliary divided piece 114 and the second auxiliary divided piece 115 correspond to the fourth divided piece; and the third auxiliary divided piece 116 and the fourth auxiliary divided piece 117 correspond to the fifth divided piece.

The first auxiliary divided piece 114 and the third auxiliary divided piece 116 are arranged to interpose the first divided piece 11 and the second divided piece 112 along the second direction (along X-axis in the drawings). The second auxiliary divided piece 115 and the fourth auxiliary divided piece 117 are arranged to interpose the first divided piece 11 and the third divided piece 113 along the second direction.

The first auxiliary divided piece 114, the second auxiliary divided piece 115, the third auxiliary divided piece 116, and the fourth auxiliary divided piece 117 respectively comprise at least one enlarged-width portion 114A, 115A, 116A, and 117A each having a width enlarged towards the outer peripheral surface of the molding core 101 compared with other areas along the longitudinal direction. These enlarged-width portions 114A, 115A, 116A, and 117A form the enlarged-diameter portion 102 of the molding core 101 together with the enlarged-width portion 112A of the second divided piece 112 and the enlarged-width portion 113A of the third divided piece 113 when the divided pieces are assembled.

### [Enlarged-Diameter Portion]

As shown in FIG. 6, the enlarged-diameter portion 102 of the molding core 101 has its diameter enlarged on the entire circumference of the molding core 101. The enlarged-width portions 112A, 114A, 115A, 113A, 117A, and 116A are arranged for a smooth connection across outer peripheries of the divided pieces in their assembled state.

### [2-2. Method of Use]

Hereinafter, a method of use of the molding core 101, that is, a method of producing the molded object using the molding core 101, will be explained. This method comprises a first process of molding the mold material on the outer peripheral surface of the molding core 101, and a second process of pulling out the molding core 101 from the molded object molded in the first process. The first process is the same as the first process explained in the method of use of the molding core 1 shown in FIG. 1. Therefore, the explanation of the first process is omitted.

### [Second Process]

The second process specifically comprises a process of removing the screws (not shown), a process of pulling out only the first divided piece 11 from the hollow of the molded object, a process of pulling out the second divided piece 112 and the third divided piece 113 from the hollow of the molded object after pulling out the first divided piece 11, a process of pulling out the first auxiliary divided piece 114, the second auxiliary divided piece 115, the third auxiliary divided piece 116, and the fourth auxiliary divided piece 117 from the hollow of the molded object after pulling out the second divided piece 112 and the third divided piece 113.

In the process of pulling out the first auxiliary divided piece 114, the second auxiliary divided piece 115, the third auxiliary divided piece 116, and the fourth auxiliary divided piece 117 from the hollow of the molded object, each auxiliary divided piece is displaced towards the central axis of the hollow along the second directions (along the X-axis in the drawings) and then displaced towards the central axis of the hollow along the first directions (along the Y-axis in the drawings). Such displacements enable the pull-out of each auxiliary divided piece from the hollow of the molded object without having the enlarged-width portions abut the inner surface of the molded object. For example, to pull out the first auxiliary divided piece 114, the first auxiliary divided piece 114 is first displaced towards the right side of the drawing to a point where it no longer abut the second auxiliary divided piece 115. Then, the first auxiliary divided piece 114 is displaced in the downward direction in the drawing to a point where an upper end of the enlarged-width portion 114A is within the diameter of a non-enlarged-width portion. The first auxiliary divided piece 114 is then pulled out. The process of pulling out only the first divided piece 11 from the hollow of the molded object, and the process of pulling out the second divided piece 112 and the third divided piece 113 from the hollow of the molded object are the same as those processes in the second process of the method of use of the molding core 1 shown in FIG. 2.

### [2-3. Effect]

According to the embodiments explicitly explained above, the following effects can be obtained.
(2a) The enlarged-diameter portion 102 enables production of the molded object that has varying outer diameter along the longitudinal direction. In the molded object obtained by using the molding core 101 in the present embodiment, such a varying outer diameter portion is integrally formed with other parts of the molded object. Accordingly, the molded object is excellent in quality, such as in terms of the strength, compared with the conventional molded products that are formed by adhering the outer diameter portion to the other parts of the molded object.
(2b) As a result of the processes of pulling out the first divided piece 11 from the hollow of the molded object and then pulling out the rest of the divided pieces as displacing each of the rest of the divided pieces towards the central axis of the molding core 101, the molding core 101 having the enlarged-diameter portion 102 can still be relatively easily pulled out from the molded object while inhibiting damages on the molded object.

### [3. Other Embodiment]

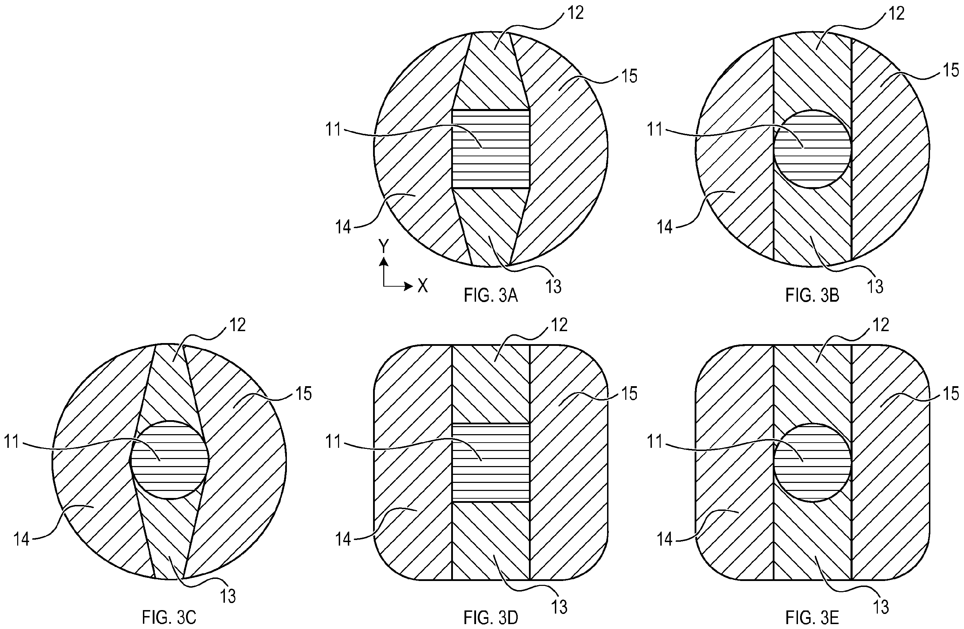

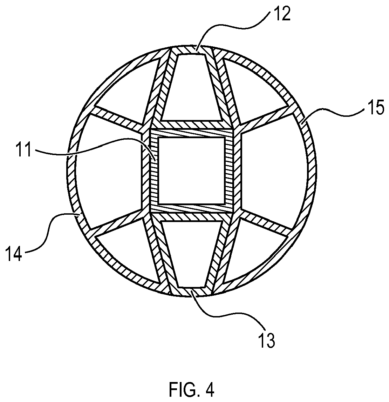

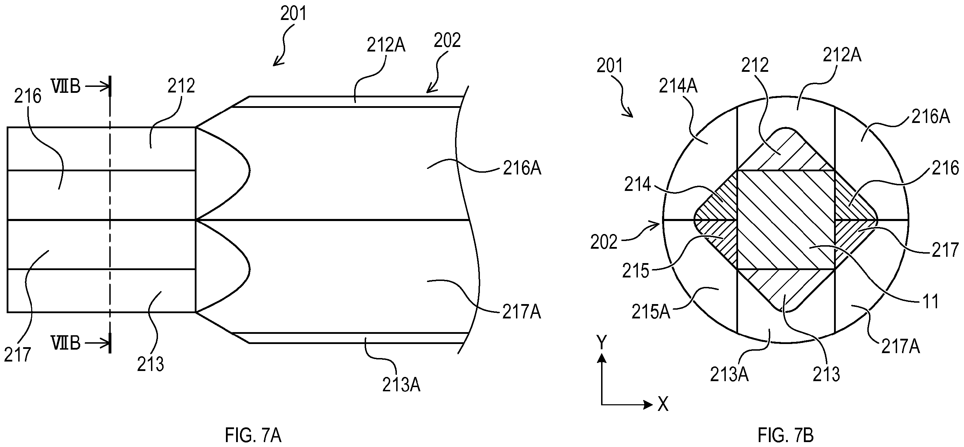

Although the embodiments of the present disclosure have been explained hereinbefore, it should be noted that the present disclosure may be achieved in various modifications without being limited to the aforementioned embodiments.
(3a) The shapes of the divided pieces of the molding cores 1, 101 in the aforementioned embodiments are merely examples. In other words, the shapes of the divided pieces can be freely designed as long as the first divided piece can be surrounded by the rest of the divided pieces and the rest of the divided pieces can be pulled out from the molded object using the space left by the pull-out of the first divided piece.
   For example, as shown in FIG. 3A, the widths of the second divided piece 12 and the third divided piece 13 of the molding core 1 along the X-axis may be tapered from the central axis of the molding core 1 outwardly in the radius direction. In other words, in the second divided piece 12 or the third divided piece 13, the abutting surface against the fourth divided piece 14 and the abutting surface against the fifth divided piece 15 may be designed as tapered surfaces that lean close to each other towards the outside of the molding core 1. In this configuration, a force directed towards the center of the molding core 1 is applied to the second divided piece 12 and the third divided piece 13 due to the stress exerted by the fourth divided piece 14 and the fifth divided piece 15, which helps improve shape accuracy of the molding core 1 in the assembled state. The maximum width of the second divided piece 12 and the third divided piece 13 along the X-axis need not always be equal to or less than the maximum width of the first divided piece 11 along the X-axis.
   As shown in FIG. 3B, the shape of the cross section of the first divided piece 11, taken perpendicular to the longitudinal direction, may be a perfect circle. Such a columnar shape of the first divided piece 11 may facilitate pull-out of the first divided piece 11. As shown in FIG. 3C, when the first divided piece 11 is a columnar body, the abutting surface against the fourth divided piece 14 and the abutting surface against the fifth divided piece 15 may also be tapered in the second divided piece 12 and the third divided piece 13.
   The shape of the cross section of the first divided piece 11, taken perpendicular to the longitudinal direction, is not limited to a rectangle or a perfect circle and may be freely designed into any shape such as a polygon other than a rectangle, an ellipse, and a star. The first divided piece 11 need not be arranged at the center of the molding core 1 and may be arranged at a position slightly displaced from the center. In addition, each divided piece may further be divided into two or more auxiliary divided pieces.
(3b) The outer shapes of the molding cores 1, 101 in the aforementioned embodiments are not limited to a circle and may be appropriately designed to coincide with the shape of the hollow of the molded object. For example, as shown in FIG. 3D and FIG. 3E, the outer shape of the molding cores may be a rectangle having rounded corners and edges. The outer shape of the molding cores may also be other than a circle and a rectangle.
(3c) The outer shape of the molding core 101 in the aforementioned embodiment may change along the longitudinal direction. For example, as seen in a molding core 201 shown in FIG. 7A, 7B, the outer shape of an enlarged-diameter portion 202 and the outer shape of a non-enlarged-diameter portion may be different from each other. In the molding core 201, the shape of a cross section of the non-enlarged-diameter portion is a square having a rounded edge and comprising seven divided pieces, namely, the first divided piece 11, a second divided piece 212, a third divided piece 213, a first auxiliary divided piece 214, a second auxiliary divided piece 215, a third auxiliary divided piece 216, and a fourth auxiliary divided piece 217. Meanwhile, the shape of a cross section of the enlarged-diameter portion 202 is a perfect circle and comprising enlarged-width portions of the divided pieces, namely the enlarged-width portions 212A, 213A, 214A, 215A, 216A, and 217A.
(3d) The divided pieces of the molding cores 1, 101 in the aforementioned embodiments need not always be solid structures. The divided pieces may also be hollow structures as shown in FIG. 4. Applications of such structures help reduce the weight of the molding core. These divided pieces can be formed by a drawing process of a metal. Thus, a relatively complicated shape can be formed. No space or gap is formed between the divided pieces having hollow structures.
(3e) A method of fixing the divided pieces of the molding core 1 in the aforementioned embodiment is not limited to the use of screws. Various fixing methods may be used. The divided pieces may be integrated with fixing tools.
(3f) In the molding core 1 in the aforementioned embodiment, an end of the first divided piece 11 need not protrude further than the rest of the divided pieces as long as the first divided piece 11 can be pulled out. The protrusion 11A may be omitted.
(3g) In the molding core 101 in the aforementioned embodiment, the enlarged-width portion need not be included in all of the second divided piece, the third divided piece, the fourth divided piece, and the fifth divided piece. The enlarged-width portion may be included only in one, two, or three divided pieces.
(3h) One function of one element in the aforementioned embodiment may be divided as two or more elements. Functions of two or more elements may be integrated into one element. A part of the configuration of the aforementioned embodiment may be omitted. At least a part of the configuration of the aforementioned embodiment may be added to or replaced with other configuration of the aforementioned embodiment. It should be noted that any and all modes that are encompassed in the technical ideas defined only by the languages in the scope of the claims are embodiments of the present disclosure.

## Claims

1. A molding core having a rod-shape and used in production of a long and hollow molded object, the molding core comprising:
divided pieces that are assembled to form a rod-shaped body,
the divided pieces comprising:
a first divided piece having a rod-shape, an outer peripheral surface of the first divided piece being entirely surrounded by the rest of the divided pieces in an assembled state,
a second divided piece and a third divided piece having a rod-shape and arranged to abut the first divided piece to interpose the first divided piece along a first direction orthogonal to a longitudinal direction of the first divided piece and form a part of an outer peripheral surface of the rod-shaped body, and
a fourth divided piece and a fifth divided piece having a rod-shape and arranged to abut the first divided piece to interpose the first divided piece along a second direction orthogonal to the first direction and form a part of the outer peripheral surface of the rod-shaped body.

2. The molding core according to claim 1, wherein
a shape of a cross section of the first divided piece taken perpendicular to the longitudinal direction is a rectangle, a square, or a circle.

3. The molding core according to claim 1 or 2, wherein
the second divided piece, the third divided piece, the fourth divided piece, and the fifth divided piece are each fixed to the first divided piece with at least one screw inserted into the rod-shaped body in a radial direction.

4. The molding core according to any one of claims 1 to 3, wherein
the first divided piece comprises a protrusion protruding in the longitudinal direction further than the rest of the divided pieces.

5. The molding core according to any one of claims 1 to 4, wherein
at least one of the second divided piece, the third divided piece, the fourth divided piece, or the fifth divided piece comprises an enlarged-width portion that is enlarged towards an outer peripheral surface of the rod-shaped body compared with other areas along the longitudinal direction.

## Amended claims

### Amended claims under Art. 19.1 PCT

1. A molding core having a rod-shape and used in production of a long and hollow molded object, the molding core comprising:
divided pieces that are assembled to form a rod-shaped body,
the divided pieces comprising:
a first divided piece having a rod-shape, an outer peripheral surface of the first divided piece being entirely surrounded by the rest of the divided pieces in an assembled state,
a second divided piece and a third divided piece having a rod-shape and arranged to abut the first divided piece to interpose the first divided piece along a first direction orthogonal to a longitudinal direction of the first divided piece and form a part of an outer peripheral surface of the rod-shaped body,
a fourth divided piece and a fifth divided piece having a rod-shape and arranged to abut the first divided piece to interpose the first divided piece along a second direction orthogonal to the first direction and form a part of the outer peripheral surface of the rod-shaped body, and
the second divided piece, the third divided piece, the fourth divided piece, and the fifth divided piece being detachably fixed to the first divided piece.

2. The molding core according to claim 1, wherein
a shape of a cross section of the first divided piece taken perpendicular to the longitudinal direction is a rectangle, a square, or a circle.

3. The molding core according to claim 1 or 2, wherein
the second divided piece, the third divided piece, the fourth divided piece, and the fifth divided piece are each fixed to the first divided piece with at least one screw inserted into the rod-shaped body in a radial direction.

4. The molding core according to any one of claims 1 to 3, wherein
the first divided piece comprises a protrusion protruding in the longitudinal direction further than the rest of the divided pieces.

5. The molding core according to any one of claims 1 to 4, wherein
at least one of the second divided piece, the third divided piece, the fourth divided piece, or the fifth divided piece comprises an enlarged-width portion that is enlarged towards an outer peripheral surface of the rod-shaped body compared with other areas along the longitudinal direction.

6. The molding core according to any one of claims 1 to 5, wherein
the first divided piece, the second divided piece, the third divided piece, the fourth divided piece, and the fifth divided piece are hollow structures.

7. A method of producing a molded object, the method comprising:
a first process of molding a hollow composite material on an outer peripheral surface of a molding core according to any one of claims 1 to 6, and
a second process of removing the molding core from the hollow composite material molded in the first process.
